# EUROPEAN PATENT SPECIFICATION

(11) **EP 4 295 541 B1**
(45) Date of publication and mention of the grant of the patent: **22.07.2026**
(21) Application number: 22711484.0
(22) Date of filing: 21.01.2022
(51) Int. Cl.: H04L 12/14, H04W 4/24

(54) **ACCESS AND MOBILITY POLICY CONTROL**
ZUGANGS- UND MOBILITÄTSRICHTLINIENSTEUERUNG
COMMANDE DE POLITIQUE D'ACCÈS ET DE MOBILITÉ

(30) Priority: 18.02.2021 EP 21382132
(43) Date of publication of application: 27.12.2023
(73) Proprietor: Telefonaktiebolaget LM Ericsson (publ), 164 83 Stockholm (SE)
(72) Inventor: FERNANDEZ ALONSO, Susana, 28009 Madrid (ES); GARCIA AZORERO, Fuencisla, 28014 Madrid (ES); PANCORBO MARCOS, Maria Belen, 28035 Madrid (ES)
(74) Representative: Ericsson
(86) International application number: PCT/EP2022/050099
(87) International publication number: WO 2022/174987

(56) References cited:
- EP-A1- 3 972 335
- WO-A1-2020/253701
- "3rd Generation Partnership Project; Technical Specification Group Core Network and Terminals; 5G System; Policy Authorization Service; Stage 3 (Release 16)", vol. CT WG3, no. V16.7.0, 18 December 2020 (2020-12-18), pages 1 - 178, XP051999251, Retrieved from the Internet <URL:https://ftp.3gpp.org/Specs/archive/29_series/29.514/29514-g70.zip 29514-g70.doc> [retrieved on 20201218]
- NTT DOCOMO ET AL: "Addition of PDU Session type IPv4v6", vol. SA WG2, no. Montreal, Canada; 20180226 - 20180302, 19 March 2018 (2018-03-19), XP051411327, Retrieved from the Internet <URL:http://www.3gpp.org/ftp/Meetings%5F3GPP%5FSYNC/SA/Docs/> [retrieved on 20180319]
- "3rd Generation Partnership Project; Technical Specification Group Services and System Aspects; Procedures for the 5G System; Stage 2 (Release 15)", 3GPP STANDARD ; TECHNICAL SPECIFICATION ; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 20 April 2017 (2017-04-20), pages 1 - 116, XP051298172
- HUAWEI (RAPPORTEUR): "General cleanup of specification", vol. SA WG2, no. Online; 20201116 - 20201120, 30 November 2020 (2020-11-30), XP051963785, Retrieved from the Internet <URL:https://ftp.3gpp.org/tsg_sa/TSG_SA/TSGs_90E_Electronic/Docs/SP-200959.zip 23503_CR0503r1_TEI16 5GS_Ph1_(Rel-16)_S2-2009346_was8697r01-23503-MegaEditorialCR.docx> [retrieved on 20201130]
- "3rd Generation Partnership Project; Technical Specification Group Core Network and Terminals; 5G System; Policy and Charging Control signalling flows and QoS parameter mapping; Stage 3 (Release 17)", vol. CT WG3, no. V17.1.0, 18 December 2020 (2020-12-18), pages 1 - 145, XP051999249, Retrieved from the Internet <URL:https://ftp.3gpp.org/Specs/archive/29_series/29.513/29513-h10.zip 29513-h10.doc> [retrieved on 20201218]

## Description

### TECHNICAL FIELD

The present invention generally relates to Access and Mobility Policy control in mobile networks, and more specifically, the invention relates to influence of Access and Mobility Policies by Application Functions.

### BACKGROUND

3GPP defines a 5G PCC (Policy and Charging Control) architecture that allows handling Policy and Charging Control in the 5G network. This architecture is defined in 3GPP TS 23.503.

The PCF (Policy Control Function) is a functional element that encompasses policy control decision and flow-based charging control functionalities. The PCF provides network control regarding the service data flow detection, gating, QoS and flow-based charging (except credit management) towards the SMF. The PCF receives session and media related information from the AF and informs AF of traffic plane events.

The PCF shall provision PCC Rules to the SMF. The PCF shall inform the SMF using PCC rules on the treatment of each service data flow that is under PCC control, in accordance with the PCF policy decisions.

The PCF provides UE policies, including Access Network Discovery and Selection Policy (ANDSP), UE Route Selection Policy (URSP), Vehicle-to-Everything Policy (V2XP) via the AMF to the UE

The SMF/UPF encompasses service data flow detection based on the filters definitions included in the PCC rules and policy enforcement.

The AMF is involved in registration management, connection management, reachability management and mobility management. It forwards the UE policies towards the served UE and reports the UE state to the PCF.

3GPP release 17 enables deployment topologies with separate session management policy control, i.e. separate PCFs for PDU sessions and non-session management policy control (UE functionality). The PCF instances are referred to as PCF for the PDU session and PCF for the UE respectively. The PCF for PDU session(s) does not support N15 reference point with the AMF (Access and Management Function), while the PCF for a UE does not support N7 reference point with the SMF (Session and Management Function). N37 reference point enables communication between the PCF for a UE andthe PCF for UE PDU session(s).

A problematic aspect of having separate PCFs for PDU sessions and non-session management policy control (PCF for the PDU session and PCF for the UE respectively) is that the PCF for the UE is not aware of PDU session related information relevant for some of its operations, e.g. access and mobility policy control. Particularly when there are access and mobility policy requests from an Application Function (AF). These limitations make the operator totally dependent on the AF demands, without any specific control on the status of the UE and PDU session to authorize, forbid or adapt the AM Policies accordingly.

EP 3 972 335 A1 discloses a solution for managing a background data transfer policy, so that a policy control function network element can obtain a background data transfer policy corresponding to a terminal in a telecommunications network.

3GPP TS 29.514 provides definitions of the Policy Authorization Services of the 5G System. It discloses solutions for 5GS Policy Authorization Services.

### SUMMARY

An object of the invention is to enable a PCF instance for non-session management policy control (known as PCF for UE) to be aware of PDU session information relevant for its operations, particularly for access and mobility policy requests by an AF.

The invention is disclosed according to the attached claims.

Access and mobility policies may be modified dynamically, and this can be initiated by an Application Function. For the case of handling the AF request targeting an individual UE with an established AM Policy Association with or without the NEF, the PCF for the UE provisions the AM Policies for the UE upon AF/NEF request, i.e. upon detection of the use of the application. However, those AM Policies do not consider relevant information based on the current conditions of the PDU session of that UE except the application start/stop event. That is, the UE could have no credit, or could have consumed more quota than the acceptable for certain AM Policies and still get the AM Policies. Similarly, for the case of handling the AF request to influence AM Policy, the PCF for the UE is informed about the detection of the start of an application. However, the PCF for the UE is totally unaware of the PDU session treatment for that UE. Further, the AF is not informed when the request to change AM policies was performed by the network, for example when the user buys a package to the ASP that enhances the service area coverage.

A first aspect of the invention relates to a method for access and mobility policy control in a communications network, the method performed by a first policy control entity for handling UE policies, the method comprises receiving at the first policy control entity for handling **UE** policies from a network node (e.g., a user data repository) a notification including access and mobility policy data for a user equipment, the notification further including an application identifier or a packet flow descriptor to which the access and mobility policy data applies; obtaining at the first policy control entity PDU session information for the user equipment relative to the application identifier or the packet flow descriptor, particularly wherein the PDU session information is at least one of an application start/stop event, an out of credit event, a reallocation of credit event or a usage report; and modifying at least one access and mobility policy at the first policy control entity based on the obtained PDU session information.

In some embodiments, obtaining at the first policy control entity PDU session information comprises transmitting from the first policy control entity to a second policy control entity for handling PDU session policies a request for PDU session information including the application identifier or the packet flow descriptor; and transmitting from the second policy control entity to the first policy control entity the requested PDU session information.

In some embodiments, the access and mobility policy data received at the first policy control entity is originated from an application server.

In some embodiments, the method further comprises transmitting a notification from the first policy control entity to the application server or a network exposure entity indicating the successful modification of the at least one access and mobility policy.

In some embodiments, the access and mobility policy data and/or access and mobility policy relate to the service area coverage of the application.

In some embodiments, the first policy control entity is a Policy Control Function for the UE, the second policy control entity is a Policy Control Function for the PDU session, the network exposure entity is a Network Exposure Function, the network node is a User Data Repository, and the application server is an Application Function.

A further aspect of the invention relates to a method for access and mobility policy control in a communications network, the method performed by a second policy control entity for handling PDU session policies, the method comprises receiving at the second policy control entity for handling PDU session policies from a first policy control entity for handling UE policies a request for PDU session information including an application identifier or a packet flow descriptor; and transmitting from the second policy control entity to the first policy control entity the requested PDU session information; particularly wherein the PDU session information is at least one of an application start/stop event, an out of credit event, a reallocation of credit event or a usage report.

In some embodiments, the first policy control entity is a Policy Control Function for the UE, the second policy control entity is a Policy Control Function for the PDU session.

A further aspect of the invention relates to a method for access and mobility policy control in a communications network, the method performed by a network exposure entity, the method comprises receiving at the network exposure entity from an application server a request including access and mobility policy data for a user equipment, the request further including the application identifier or the packet flow descriptor to which the access and mobility policy data applies; storing by the network exposure entity in a user data repository the access and mobility policy data along with the application identifier or the packet flow descriptor; and transmitting from the network exposure entity to the application server a response indicating the result of the request.

In some embodiments, the method further comprises receiving a notification from a first policy control entity for handling UE policies at the network exposure entity indicating the successful modification of at least one access and mobility policy based on the access and mobility policy data.

In some embodiments, the access and mobility policy data and/or access and mobility policy relate to the service area coverage of the application.

In some embodiments, the first policy control entity is a Policy Control Function for the UE, the network exposure entity is a Network Exposure Function, the user data repository is a User Data Repository, and the application server is an Application Function.

A further aspect of the invention relates to a method for access and mobility policy control in a communications network, the method performed by an application server, the method comprises transmitting to a network exposure entity from the application server a request including access and mobility policy data for a user equipment, the request further including the application identifier or the packet flow descriptor to which the access and mobility policy data applies; and receiving from the network exposure entity at the application server a response indicating the result of the request.

In some embodiments, the method further comprises transmitting a notification from a first policy control entity for handling UE policies to the application server indicating the successful modification of the at least one access and mobility policy based on the access and mobility policy data.

In some embodiments, the access and mobility policy data and/or access and mobility policy relate to the service area coverage of the application.

In some embodiments, the access and mobility policy data transmitted from the application server is directed towards the first policy control entity.

In some embodiments, the first policy control entity is a Policy Control Function for the UE, the network exposure entity is a Network Exposure Function, and the application server is an Application Function.

This disclosure also provides mobile network nodes, particularly a first policy control entity, a second policy control entity, a network exposure entity, and an application server, each configured to perform the respective methods as described herein. This disclosure also provides the corresponding computer program and computer program products comprising code, for example in the form of a computer program, that when run on processing circuitry of the mobile network nodes causes the mobile network nodes to perform the disclosed methods.

Advantageously, the solution disclosed herein enables the operator to take the control of the final provided AM Policies so that they are adapted to the usage the UE is making of the services and the status on his/her credit conditions.

Further advantageously, the solution disclosed herein enables the AF to be aware of events regarding access and mobility policies, particularly the access and mobility policies related to a previous access and mobility policy control request from the AF. It also enables the operator to notify about the final provided AM Policies to the AF that subscribed with the PCF to the notifications on AM Policies (e.g. SARs, RFSP) changes.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

### BRIEF DESCRIPTION OF THE DRAWINGS

The invention may best be understood by referring to the following description and accompanying drawings that are used to illustrate particular embodiments of the invention. In the drawings:
Figure 1 is a networked system in accordance with particular embodiments of the solution described herein;
Figure 2A and Figure 2B are a signaling diagram illustrating a procedure according to particular embodiments of the solution described herein;
Figure 3A and Figure 3B are a signaling diagram illustrating a procedure according to particular embodiments of the solution described herein;
Figure 4A and Figure 4B are a signaling diagram illustrating a procedure according to particular embodiments of the solution described herein;
Figure 5 is a flowchart illustrating a method performed by a mobile network node according to particular embodiments of the solution described herein;
Figure 6 is a flowchart illustrating a method performed by a mobile network node according to particular embodiments of the solution described herein;
Figure 7 is a flowchart illustrating a method performed by a mobile network node according to particular embodiments of the solution described herein;
Figure 8 is a flowchart illustrating a method performed by a mobile network node according to particular embodiments of the solution described herein;
Figure 9 is a block diagram of a mobile network node configured in accordance with particular embodiments of the solution described herein;
Figure 10 is a block diagram of a mobile network node configured in accordance with particular embodiments of the solution described herein;
Figure 11 is a block diagram of a mobile network node configured in accordance with particular embodiments of the solution described herein;
Figure 12 is a block diagram of a mobile network node configured in accordance with particular embodiments of the solution described herein.

### DETAILED DESCRIPTION

The invention will now be described in detail hereinafter with reference to the accompanying drawings, in which examples of embodiments or implementations of the invention are shown. The invention may, however, be embodied or implemented in many different forms and should not be construed as limited to the embodiments set forth herein. Rather, these embodiments are provided so that this disclosure will be thorough and complete, and will fully convey the scope of present invention to those skilled in the art. It should also be noted that these embodiments are not mutually exclusive. Components from one embodiment may be tacitly assumed to be present/used in another embodiment. These embodiments of the disclosed subject matter are presented as teaching examples and are not to be construed as limiting the scope of the disclosed subject matter. For example, certain details of the described embodiments may be modified, omitted, or expanded upon without departing from the scope of the described subject matter.

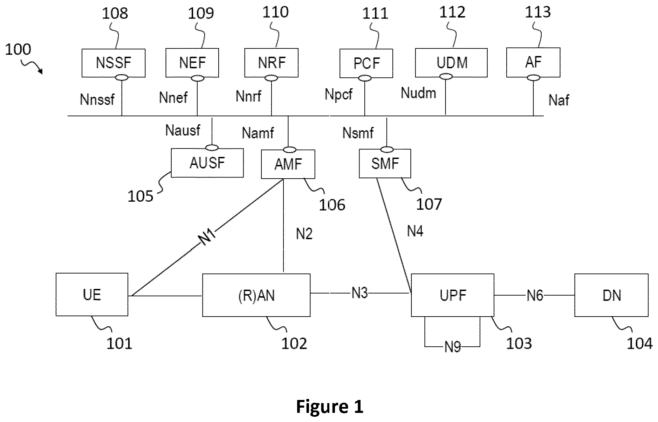

The example embodiments described herein arise in the context of a telecommunications network, including but not limited to a telecommunications network that conforms to and/or otherwise incorporates aspects of a fifth generation (5G) architecture. Figure 1 is an example networked system 100 in accordance with example embodiments of the present disclosure. Figure 1 specifically illustrates User Equipment (UE) 101, which may be in communication with a (Radio) Access Network (RAN) 102 and Access and Mobility Management Function (AMF) 106 and User Plane Function (UPF) 103. The AMF 106 may, in turn, be in communication with core network services including Session Management Function (SMF) 107 and Policy Control Function (PCF) 111. The core network services may also be in communication with an Application Server/ Application Function (AS/AF) 113. Other networked services also include Network Slice Selection Function (NSSF) 108, Authentication Server Function (AUSF) 105, User Data Management (UDM) 112, Network Exposure Function (NEF) 109, Network Repository Function (NRF) 110 and Data Network (DN) 104. In some example implementations of embodiments of the present disclosure, an AMF 106, SMF 107, UPF 103, PCF 111, AUSF 105, NRF 110, UDM 112, NEF 109, AF 113, and NSSF 108 are each considered to be an NF. One or more additional instances of the network functions (NF) may be incorporated into the networked system.

The solution described herein aims to enable a PCF instance for non-session management policy control (known as PCF for UE) to be aware of PDU session information relevant for its operations, particularly for access and mobility policy requests by an AF.

Access and mobility policies may be modified dynamically, and this can be initiated by an Application Function. For the case of handling the AF request targeting an individual UE with an established AM Policy Association with or without the NEF, the PCF for the UE provisions the AM Policies for the UE upon AF/NEF request, i.e. upon detection of the use of the application. However, those AM Policies do not consider relevant information based on the current conditions of the PDU session of that UE except the application start/stop event. That is, the UE could have no credit, or could have consumed more quota than the acceptable for certain AM Policies and still get the AM Policies. Similarly, for the case of handling the AF request to influence AM Policy, the PCF for the UE is informed about the detection of the start of an application. However, the PCF for the UE is totally unaware of the PDU session treatment for that UE. Further, the AF is not informed when the request to change AM policies was performed by the network, for example when the user buys a package to the ASP that enhances the service area coverage.

To achieve such object, this disclosure provides a method performed by a first policy control entity, a second policy control entity, a network exposure entity, and an application server. The method comprises receiving at a first policy control entity for handling UE policies from a network node (e.g., a user data repository) a notification including access and mobility policy data for a user equipment, the notification further including an application identifier or a packet flow descriptor to which the access and mobility policy data applies; obtaining at the first policy control entity PDU session information for the user equipment relative to the application identifier or the packet flow descriptor, particularly wherein the PDU session information is at least one of an application start/stop event, an out of credit event, a reallocation of credit event or a usage report; and modifying at least one access and mobility policy at the first policy control entity based on the obtained PDU session information.

In some embodiments, the first policy control entity PDU session information comprises transmitting from the first policy control entity to a second policy control entity for handling PDU session policies a request for PDU session information including the application identifier or the packet flow descriptor; and transmitting from the second policy control entity to the first policy control entity the requested PDU session information.

In some embodiments, the method further comprises receiving at a network exposure entity from an application server a request including the access and mobility policy data for the user equipment, the request further including the application identifier or the packet flow descriptor to which the access and mobility policy data applies; storing by the network exposure entity in the network node the access and mobility policy data along with the application identifier or the packet flow descriptor; and transmitting from the network exposure entity to the application server a response indicating the result of the request.

In some embodiments, the method further comprises transmitting a notification from the first policy control entity to the application server or the network exposure entity indicating the successful modification of the at least one access and mobility policy.

In some embodiments, the access and mobility policy data and/or access and mobility policy relate to the service area coverage of the application.

In some embodiments, the access and mobility policy data received at the first policy control entity is originated from the application server.

In some embodiments, the first policy control entity is a Policy Control Function for the UE, the second policy control entity is a Policy Control Function for the PDU session, the network exposure entity is a Network Exposure Function, the network node is a User Data Repository, and the application server is an Application Function.

This disclosure also provides mobile network nodes, particularly a first policy control entity, a second policy control entity, a network exposure entity, and an application server, each configured to perform the respective methods as described herein. This disclosure also provides the corresponding computer program and computer program products comprising code, for example in the form of a computer program, that when run on processing circuitry of the mobile network nodes causes the mobile network nodes to perform the disclosed methods.

Advantageously, the solution disclosed herein enables the operator to take the control of the final provided AM Policies so that they are adapted to the usage the UE is making of the services and the status on his/her credit conditions.

Further advantageously, the solution disclosed herein enables the AF to be aware of events regarding access and mobility policies, particularly the access and mobility policies related to a previous access and mobility policy control request from the AF. It also enables the operator to notify about the final provided AM Policies to the AF that subscribed with the PCF to the notifications on AM Policies (e.g. SARs, RFSP) changes.

Hereinafter, drawings showing examples of embodiments of the solution are described in detail.

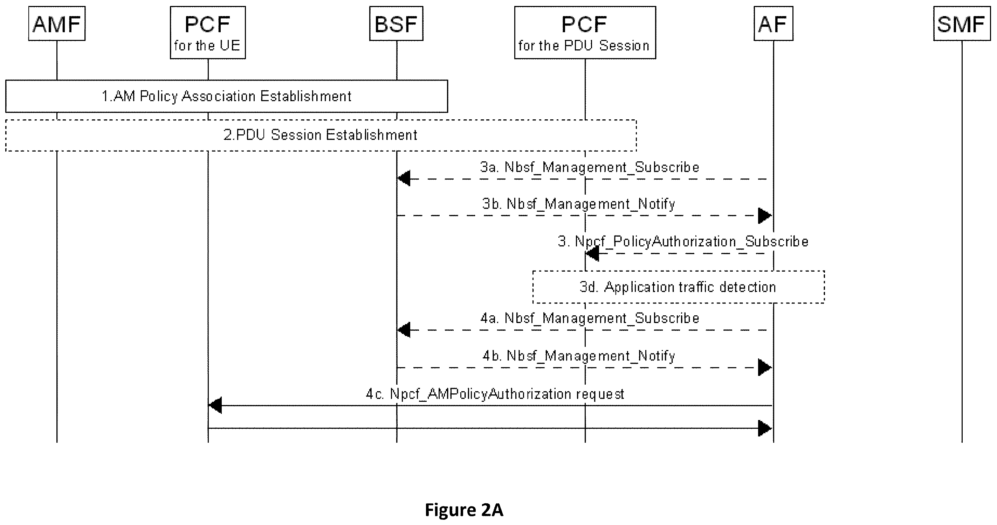

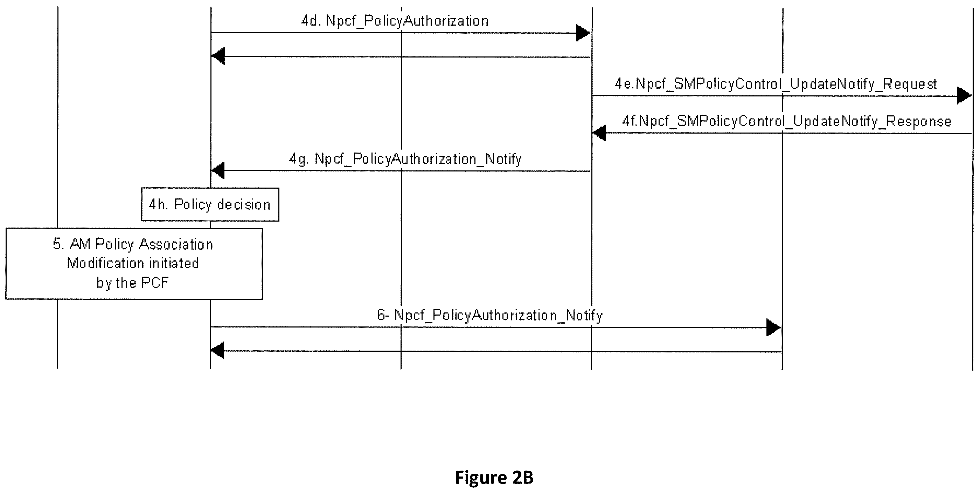

Figure 2A and Figure 2B are a signaling diagram illustrating a procedure for access and mobility policy control in a communications network. The procedure is performed by an AMF 106, a PCF for the UE 111, a PCF for the PDU session 111, a SMF 107, a BSF 201, a NEF 109 and an AF 113. The steps of the procedure are as follows.
1. An AM Policy Association is established for a UE.
2. A PDU session may be established by this UE, including the registration of the PCF for the PDU Session to the BSF as the PCF that manages this PDU Session providing as inputs the UE SUPI/GPSI, the UE address, and the DNN, S-NSSAI.

NOTE 2: Step 2 can also occur after step 3a and before step 3b.

3a. The AF may search the PCF for the PDU Session using Nbsf_Management_Subscribe with SUPI or GPSI and (DNN, S-NSSAI) as parameters.

3b. The BSF provides to the AF the identity of the PCF for the PDU Session and the UE address for the requested SUPI or GPSI and (DNN, S-NSSAI) combination via an Nbsf_Management_Notify operation. If a matching entry already exists in the BSF when step 3a is performed, this shall be immediately reported by Nbsf_Management_Notify.

NOTE 3: Steps 3a and 3b can be omitted if the AF is configured with the target PCF address(es).

3c. The AF may subscribe to the PCF for the PDU Session for the "application traffic start/stop" event, providing the UE address and an Application ID or a set of SDF filters in a Npcf_PolicyAuthorization_Subscribe request.

3d. Application traffic start/stop detection is performed.

3e. The PCF for the PDU Session notifies the AF about the detected application traffic start/stop event using Npcf_PolicyAuthorization_Notify.

4a. The AF may search the PCF for the UE using Nbsf_Management_Subscribe with SUPI or GPSI as input, indicating that it is searching for the PCF that handles the AM Policy Association of the UE.

4b. The BSF provides to the AF the identity of the PCF for the UE for the requested SUPI or GPSI via an Nbsf_Management_Notify operation. If a matching entry already exists in the BSF when step 4a is performed, this shall be immediately reported by Nbsf_Management_Notify.

NOTE 4: Steps 4a and 4b can be omitted if the AF is configured with the target PCF address(es).

4c. The AF sends to PCF for the UE its request for the AM policy of the UE (identified by SUPI or GPSI) using Npcf_AMPolicyAuthorization (optionally providing a timer on how long this policy shall last) and gets informed about the status of the operation. As part of the Npcf_AMPolicyAuthorization request, the AF may subscribe to relevant events, e.g., events related to change of coverage. The AF provides the Application Id or the Flow Descriptions for which the AM Policies applies.

4d. The PCF for the UE checks if there are operator policies that are dependent on the PDU session conditions. If it is so, the PCF for the UE will find the relevant information from the PCF for the PDU session by sending the Npcf_PolicyAuthorization request to subscribe to ( "Out of Credit", "Reallocation of Credit" and/or "Usage Report" for the Application ID or the Flow Descriptions for which AM Policies applies, including an immediate flag to request immediate reporting and whether the subscription will still last for future changes.

4e. The PCF for the PDU session will check the received events including the immediate flag and:
- If the PCF for the UE subscribed to Out of Credit for the same CK (Charging Key) and/or Reallocation of Credit for the same CK associated with the ApplicationlD(s) or Flow Description(s) and the subscription already exists in the PCF for the PDU session, it assumes the UE has credit if not reported otherwise.
- If the PCF for the UE subscribed to Usage Report, the PCF for the PDU session needs to request the SMF about the current consumption for the MK (Monitoring Key) associated with the ApplicationlD(s) or Flow Description(s) or for the PDU session of the UE.

If the PCF for the UE subscribed permanently to those events, the PCF for the PDU session will subscribe in the SMF if not done before.

The PCF for the PDU session sends an Npcf_SMPolicyAssociation_Update towards the SMF to request the needed information.

4f. The SMF replies the PCF for the PDU session with the required immediate information and will start monitoring the consumption and/or credit status based on the received instructions.

4g. The PCF for the PDU session replies the PCF for the UE.

4h. The PCF for the UE analyses the received information and generates the AM Policy accordingly.

5. An AM Policy Association Modification procedure initiated by the PCF for the UE is performed. If the AF has subscribed to access and mobility management related events in step 4, then the PCF sets the respective Policy Control Request Triggers in the AMF as part of the AM Policy Association Modification procedure if not already subscribed.

6. The PCF will notify the AF about the successful allocation of AM Policies such as service area coverage to the AF (about the outcome of the Policy Evaluation (step 4) and the resulting AM Policies installed in the AMF) in an Npcf_AMPolicyAuthorization Notify Request.

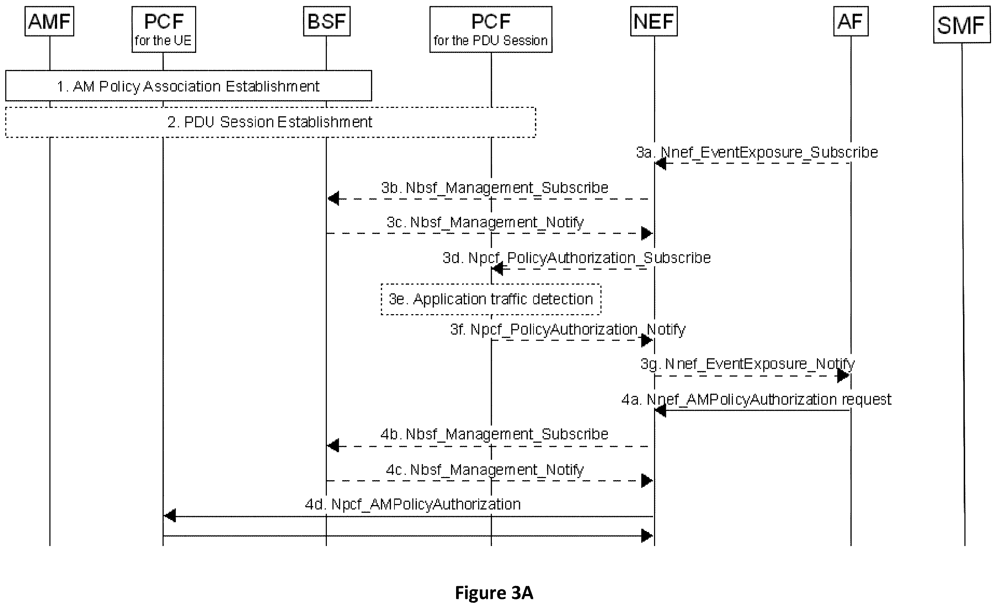

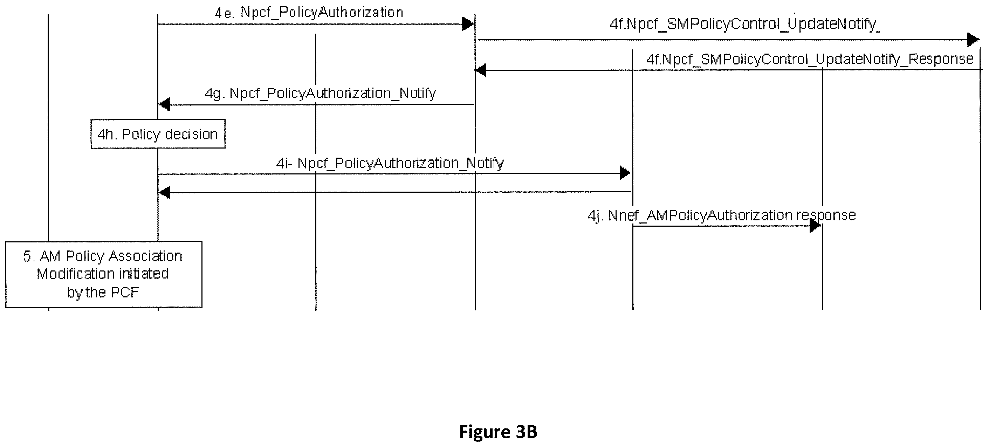

Figure 3A and Figure 3B are a signaling diagram illustrating a procedure for access and mobility policy control in a communications network. The procedure is performed by an AMF 106, a PCF for the UE 111, a PCF for the PDU session 111, a SMF 107, a BSF 201, a NEF 109 and an AF 113. The steps of the procedure are as follows.
1. An AM Policy Association is established for a UE.
2. A PDU session may be established by this UE, including the registration of the PCF for the PDU Session to the BSF as the PCF that manages this PDU Session providing as inputs the UE SUPI/GPSI, the UE address, and the DNN, S-NSSAI.

NOTE 6: Step 2 can also occur after step 3b and before step 3c.

3a. The AF may subscribe to the NEF for the "application traffic start/stop" event, providing the UE SUPI or GPSI, the (DNN, S-NSSAI) combination, and an Application ID or a set of SDF filters in a Nnef_EventExposure_Subscribe request.

3b. The NEF may search the PCF for the PDU Session using Nbsf_Management_Subscribe with SUPI and (DNN, S-NSSAI) as parameters.

3c. The BSF provides to the NEF the identity of the PCF for the PDU Session and the UE address for the requested SUPI and (DNN, S-NSSAI) combination via an Nbsf_Management_Notify operation. If a matching entry already exists in the BSF when step 3b is performed, this shall be immediately reported by Nbsf_Management_Notify.

3d. The NEF may subscribe to the PCF for the PDU Session for the "application traffic start/stop" event, providing the UE address and an Application ID or a set of SDF filters in a Npcf_PolicyAuthorization_Subscribe request.

3e. Application traffic start/stop detection is performed.

3f. The PCF for the PDU Session notifies the NEF about the detected application traffic start/stop event using Npcf_PolicyAuthorization_Notify.

3g. The NEF notifies the AF about the detected application traffic start/stop event using Nnef_EventExposure_Notify.

4a. The AF sends to NEF its request for the AM policy of the UE (identified by SUPI or GPSI) using Nnef_AMPolicyAuthorization (optionally providing a timer on how long this policy shall last). As part of the Nnef_AMPolicyAuthorization request, the AF may request to subscribe for relevant events, e.g., events for change of service coverage.

4b. The NEF may search the PCF for the UE using Nbsf_Management_Subscribe with SUPI as input parameter, indicating that it is searching for the PCF that handles the AM Policy Association of the UE.

4c. The NEF sends to PCF for the UE its request for the AM policy of the UE (identified by SUPI) using Npcf_AMPolicyAuthorization (having potentially translated GPSI to SUPI and optionally providing a timer on how long this policy shall last) and gets informed about the status of the operation. As part of the Npcf_AMPolicyAuthorization request, the NEF may subscribe for relevant events, events for change of coverage.

4d. The PCF for the UE checks if there are operator policies that are dependent on the PDU session conditions. If it is so, the PCF for the UE will find the relevant information from the PCF for the PDU session by sending the Npcf_PolicyAuthorization request to subscribe to "Out of Credit", "Reallocation of Credit" and/or "Usage Report" for the Application ID or the Flow Descriptions for which AM Policies applies, including an immediate flag to request immediate reporting and whether the subscription will still last for future changes.

4e. The PCF for the PDU session will check the received events including the immediate flag and:
- If the PCF for the UE subscribed to Out of Credit and/or Reallocation of Credit the same CK associated with the ApplicationlD(s) or Flow Description(s) and the subscription already exists in the PCF for the PDU session, it assumes the UE has credit if not reported otherwise.
- If the PCF for the UE subscribed to Usage Report the same MK associated with the ApplicationlD(s) or Flow Description(s) or for the PDU session, the PCF for the PDU session needs to request the SMF about the current consumption.

If the PCF for the UE subscribed permanently to those events, the PCF for the PDU session will subscribe in the SMF if not done before.

The PCF for the PDU session sends an Npcf_SMPolicyAssociation_Update towards the SMF to request the needed information.

4f. The SMF replies the PCF for the PDU session with the required immediate information and will start monitoring the consumption and/or credit status based on the received instructions. The SMF may also instruct the UPF to report start and stop of traffic detection, including a Service Data Flow(s) or an Application ID.

4g. The PCF for the PDU session replies the PCF for the UE.

4h. The PCF for the UE analyses the received information and generates the AM Policy accordingly.

4i. The PCF informs the NEF about the outcome in the Npcf_AMPolicyAuthorization reply.

4j. The NEF informs the AF about the outcome of the AM policy authorization in an Nnef_AMPolicyAuthorization response.

5. An AM Policy Association Modification procedure initiated by the PCF for the UE is performed. If the AF has subscribed to access and mobility management related events in step 4, then the PCF sets the respective Policy Control Request Triggers in the AMF as part of the AM Policy Association Modification procedure, if not already subscribed.

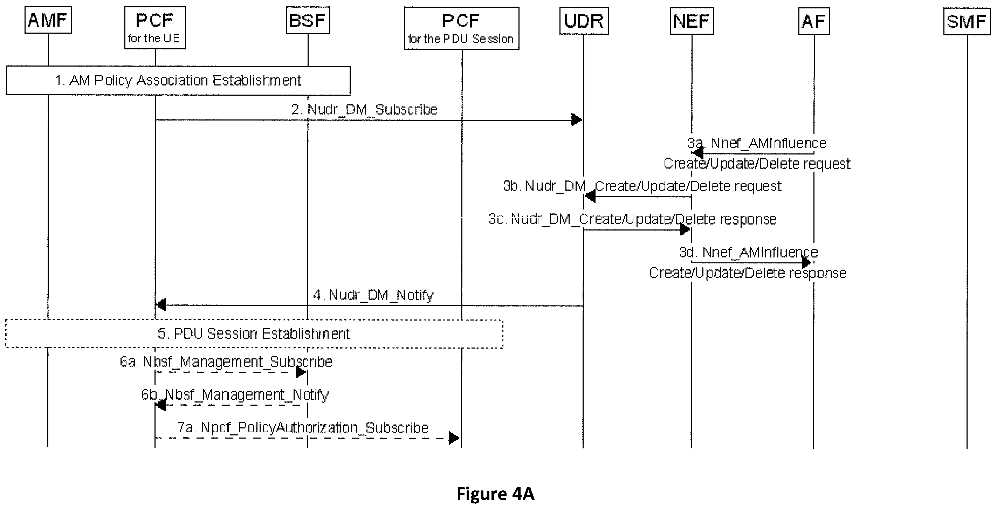

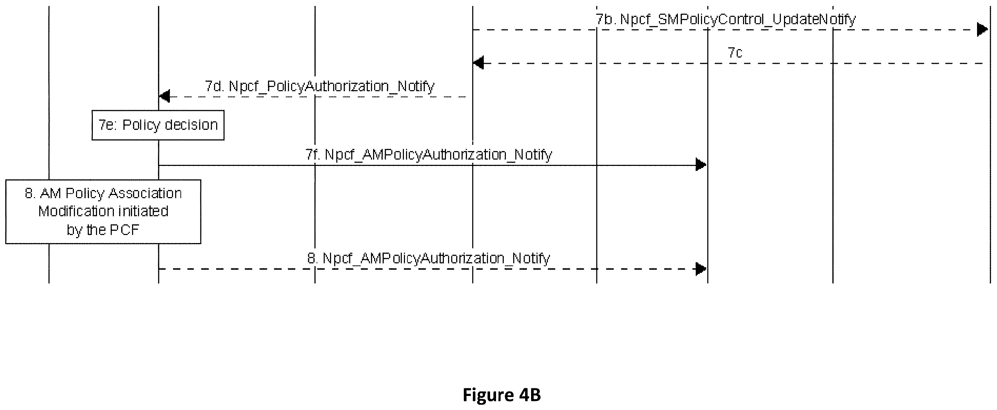

Figure 4A and Figure 4B are a signaling diagram illustrating a procedure for access and mobility policy control in a communications network. The procedure is performed by an AMF 106, a PCF for the UE 111, a PCF for the PDU session 111, a SMF 107, a BSF 201 and an AF 113. The steps of the procedure are as follows.
1. AM Policy Association establishment.
2. The PCF for the UE subscribes to policy data related to AM influence (Data Set = Application Data; Data Subset = AM influence information, Data Key = S-NSSAl and DNN and/or Internal Group Identifier or SUPI).

3a. To create a new request, the AF provides "AM influence information" data to the NEF using the Nnef_AMInfluence_Create service operation, including a target (one UE identified by SUPI or GPSI, a group of UEs identified by an External Group Identifier, all UEs, or one or more subscriber categories or subscribed services, which can be used to retrieve a set of UEs), an optional indication of target application traffic (DNN, S-NSSAI and optionally an Application ID or SDF filters), a priority level, and requirements related to AM policy (e.g. service coverage requirements, throughput requirements). The request contains also an AF Transaction Id. If with this request the AF subscribes to events related with access and mobility management policies, the AF indicates also where it desires to receive the corresponding notifications. To update or remove an existing request, the AF invokes an Nnef_AMInfluence_Update or Nnef_AMInfluence_Delete service operation providing the corresponding AF Transaction Id.

NOTE 2: The priority level is used to resolve conflicts when that start/stop of different applications requires the usage of different AM policies. In such cases, the policy with the highest priority is selected.

3b. The NEF stores, updates, or removes the policy data of step 3a in the UDR, having translated any External Group Identifier to an Internal Group Identifier and any GPSI to a SUPI.

3c. The UDR informs the NEF about the result of the operation of step 3b.

3d. The NEF informs the AF about the result of the Nnef_AMinfluence operation performed in step 3a.

NOTE 3: Steps 1, 2, and 3 can occur in any order.

4. The UDR notifies the PCF(s) that have a matching subscription (from step 2) about the data stored, updated, or removed in step 3. If matching entries already existed in the UDR when step 3b is performed, this shall be immediately reported by Nudr_DM_Notify.

5. A PDU session may be established by the UE, including the registration of the PCF for the PDU Session to the BSF as the PCF that manages this PDU Session providing as inputs the UE SUPI/GPSI, the UE address, and the DNN, S-NSSAI.

NOTE 4: Step 5 can occur any time after step 1 and before step 6b.

6a. The PCF for the UE may search the PCF for the PDU Session using Nbsf_Management_Subscribe with SUPI and (DNN, S-NSSAI) as parameters.

6b. The BSF provides to the PCF for the UE the identity of the PCF for the PDU Session and the UE address for the requested SUPI and (DNN, S-NSSAI) combination via an Nbsf_Management_Notify operation. If a matching entry already exists in the BSF when step 6a is performed, this shall be immediately reported by Nbsf_Management_Notify.

7a. The PCF for the UE may subscribe to the PCF for the PDU Session for the "application traffic start/stop" event, providing the UE SUPI and an Application ID or a set of SDF filters in a Npcf_PolicyAuthorization_Subscribe request. The PCF for the UE checks if there are operator policies that are dependent on the PDU session conditions. If it is so, the PCF for the UE will find the relevant information from the PCF for the PDU session by sending the Npcf_PolicyAuthorization request to subscribe to "Out of Credit", "Reallocation of Credit" and/or "Usage Report" for the Application ID or the Flow Descriptions for which AM Policies applies, including an immediate flag to request immediate reporting and whether the subscription will still last for future changes.

7b. The PCF for the PDU session will check the received events including the immediate flag and:
- If the PCF for the UE subscribed to Out of Credit and/or Reallocation of Credit for the CK associated with the Application Id(s) or Flow Description(s) and the subscription already exists in the PCF for the PDU session, it assumes the UE has credit if not reported otherwise.
- If the PCF for the UE subscribed to Usage Report for the MK associated to the Application ID(s) or Flow Description(s) or to the PDU session(s), the PCF for the PDU session needs to request the SMF about the current consumption.

If the PCF for the UE subscribed permanently to those events, the PCF for the PDU session will subscribe in the SMF if not done before.

The PCF for the PDU session sends an Npcf_SMPolicyAssociation_Update towards the SMF to request the needed information.

7c. The SMF replies the PCF for the PDU session with the required immediate information and will start monitoring the consumption and/or credit status based on the received instructions.

7d. The PCF for the PDU session replies the PCF for the UE, using Npcf_PolicyAuthorization_Notify..

7e. The PCF for the UE analyses the received information and generates the AM Policy accordingly.

7f. The PCF informs the NEF about the successful allocation of AM Policies such as service area coverage to the AF (about the outcome of the Policy Evaluation (step 4) and the resulting AM Policies installed in the AMF consequence of the current PDU session policies) with the Npcf_AMPolicyAuthorization Notify if the AF implicitly subscribed to these notifications when provisioning the required AM Policies in UDR in step 3b.

Subsequently, application traffic start/stop detection is performed.

Subsequently, the PCF for the PDU Session notifies the PCF for the UE about the detected application traffic start/stop event using Npcf_PolicyAuthorization_Notify.

8. An AM Policy re-evaluation takes place and an AM Policy Association Modification procedure initiated by the PCF for the UE is performed. If the AF has subscribed to access and mobility management related events in step 3, then the PCF will notify the AF about the event (about the changes in AM Policies). It can be done in two ways:
- Using the Npcf_EventExposure to the received Notification URI towards the NEF (the notification URI was stored in UDR in step 3b, together with the subscription to the notified event). The NEF will report the received events to the AF using the Nnef_AMInfluence Notify.
- Using the Npcf_AMPolicyAuthorization Notify Request to the received Notification URI towards the NEF (the notification URI was stored in UDR in step 3b, together with the subscription to the notified event). The NEF will provide the reported event to the AF via Nnef_AMinfluence_Notify.

Additionally, the PCF may need to immediate trigger the Npcf_PolicyAuthorization Create/Update/Subscribe for further reportings.

NOTE: It can be done either way with the Npcf_EventExposure and Npcf_AMPolicyAuthorization considering that the protocol implementation for the Npcf_EventExposure_Notify and the Npcf_AMPolicyAuthorization is equivalent, i.e., same data model for the HTTP POST request body.

An AF that provides AM Policies requirements would be notified of the outcome of the required AM Policy via Npcf_AMPolicyAuthorization.

An AF that only wants to observe the changes of AM Policies would subscribe and be notified of AM Policies via Npcf_EventExposure.

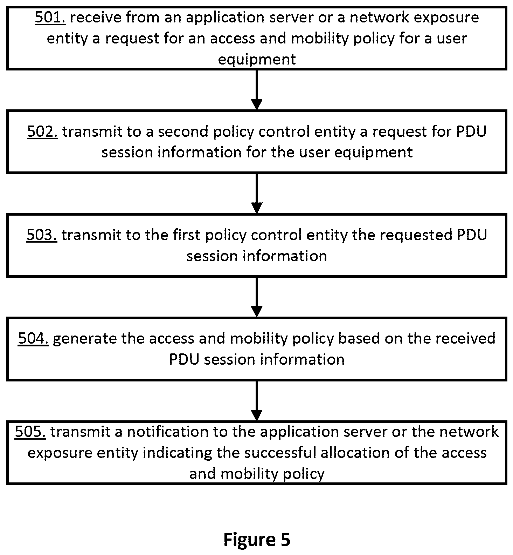

Figure 5 is a flowchart illustrating a method performed by a first policy control entity for access and mobility policy control in a communications network. The first policy control entity may be a PCF 111.

At step 501, the first policy control entity receives from an application server or a network exposure entity a request for an access and mobility policy for a user equipment, the request further including an application identifier or a packet flow descriptor to which the access and mobility policy applies.

At step 502, the first policy control entity transmits to a second policy control entity a request for PDU session information for the user equipment, the request including the application identifier or the packet flow descriptor, particularly wherein the PDU session information is an application start/stop event, an out of credit event, a reallocation of credit event or an usage report.

At step 503, the first policy control entity transmits to the first policy control entity the requested PDU session information.

At step 504, the first policy control entity generates the access and mobility policy based on the received PDU session information.

At step 505, the first policy control entity transmits a notification to the application server or the network exposure entity indicating the successful allocation of the access and mobility policy, particularly wherein the access and mobility policy relates to the service area coverage of the application.

The second policy control entity may be a Policy Control Function 111 for the PDU session, the network exposure entity may be a Network Exposure Function 109 and the application server may be an Application Function 113.

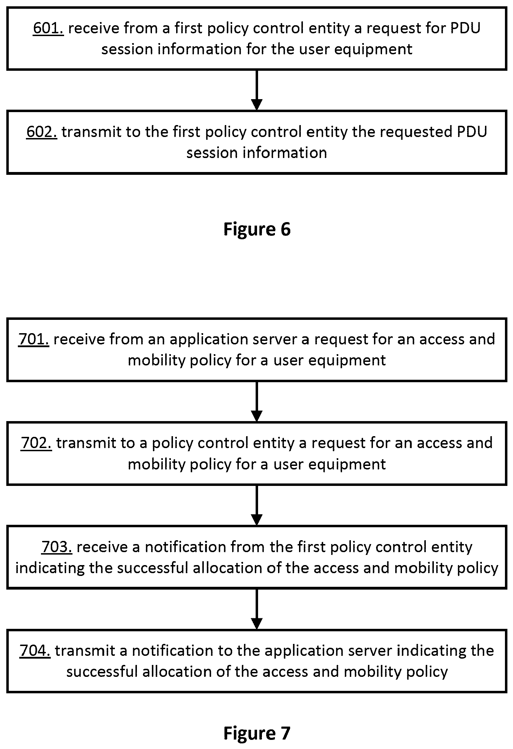

Figure 6 is a flowchart illustrating a method performed by a second policy control entity for access and mobility policy control in a communications network. The second policy control entity may be a PCF 111.

At step 601, the second policy control entity receives from a first policy control entity a request for PDU session information for the user equipment, the request including the application identifier or the packet flow descriptor, particularly wherein the PDU session information is an application start/stop event, an out of credit event, a reallocation of credit event or an usage report.

At step 602, the second policy control entity transmits to the first policy control entity the requested PDU session information.

Figure 7 is a flowchart illustrating a method performed by a network exposure entity for access and mobility policy control in a communications network. The network exposure entity may be a NEF 109.

At step 701, the network exposure entity receives from an application server a request for an access and mobility policy for a user equipment, the request further including an application identifier or a packet flow descriptor to which the access and mobility policy applies.

At step 702, the network exposure entity transmits to a policy control entity a request for an access and mobility policy for a user equipment, the request further including an application identifier or a packet flow descriptor to which the access and mobility policy applies.

At step 703, the network exposure entity receives a notification from the first policy control entity indicating the successful allocation of the access and mobility policy, particularly wherein the access and mobility policy relates to the service area coverage of the application.

At step 704, the network exposure entity transmits a notification to the application server indicating the successful allocation of the access and mobility policy, particularly wherein the access and mobility policy relates to the service area coverage of the application.

The first policy control entity may be a Policy Control Function 111 for the UE, and the second policy control entity is a Policy Control Function 111 for the PDU session.

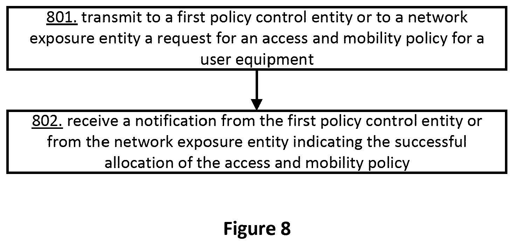

Figure 8 is a flowchart illustrating a method performed by an application server for access and mobility policy control in a communications network. The application server may be an AF 113.

At step 801, the application server transmits to a first policy control entity or to a network exposure entity a request for an access and mobility policy for a user equipment, the request further including an application identifier or a packet flow descriptor to which the access and mobility policy applies.

At step 802, the application server receives a notification from the first policy control entity or from the network exposure entity indicating the successful allocation of the access and mobility policy, particularly wherein the access and mobility policy relates to the service area coverage of the application.

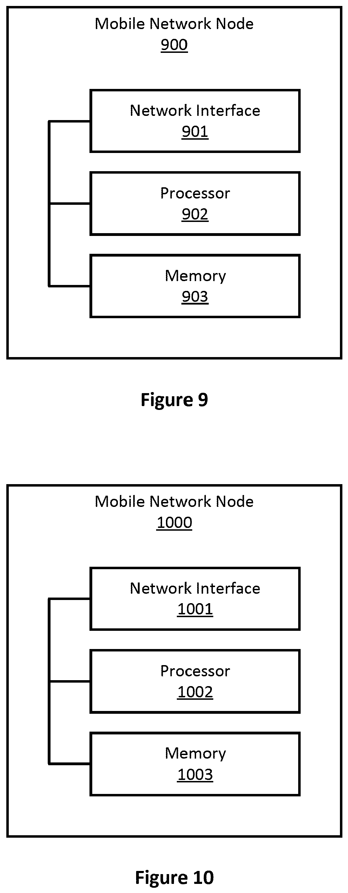

Figure 9 is a block diagram illustrating elements of a mobile network node 900 of a mobile communications network. In some embodiments, the mobile network node 900 is a PCF for the **UE** 111. As shown, the mobile network node may include network interface circuitry 901 (also referred to as a network interface) configured to provide communications with other nodes of the core network and/or the network. The mobile network node may also include a processing circuitry 902 (also referred to as a processor) coupled to the network interface circuitry, and memory circuitry 903 (also referred to as memory) coupled to the processing circuitry. The memory circuitry 903 may include computer readable program code that when executed by the processing circuitry 902 causes the processing circuitry to perform operations according to embodiments disclosed herein. According to other embodiments, processing circuitry 902 may be defined to include memory so that a separate memory circuitry is not required. As discussed herein, operations of the mobile network node may be performed by processing circuitry 902 and/or network interface circuitry 901. For example, processing circuitry 902 may control network interface circuitry 901 to transmit communications through network interface circuitry 901 to one or more other network nodes and/or to receive communications through network interface circuitry from one or more other network nodes. Moreover, modules may be stored in memory 903, and these modules may provide instructions so that when instructions of a module are executed by processing circuitry 902, processing circuitry 902 performs respective operations (e.g., operations discussed below with respect to Example Embodiments relating to core network nodes).

Figure 10 is a block diagram illustrating elements of a mobile network node 1000 of a mobile communications network. In some embodiments, the mobile network node 1000 is a PCF for the PDU session 111. As shown, the mobile network node may include network interface circuitry 1001 (also referred to as a network interface) configured to provide communications with other nodes of the core network and/or the network. The mobile network node may also include a processing circuitry 1002 (also referred to as a processor) coupled to the network interface circuitry, and memory circuitry 1003 (also referred to as memory) coupled to the processing circuitry. The memory circuitry 1003 may include computer readable program code that when executed by the processing circuitry 1002 causes the processing circuitry to perform operations according to embodiments disclosed herein. According to other embodiments, processing circuitry 1002 may be defined to include memory so that a separate memory circuitry is not required. As discussed herein, operations of the mobile network node may be performed by processing circuitry 1002 and/or network interface circuitry 1001. For example, processing circuitry 1002 may control network interface circuitry 1001 to transmit communications through network interface circuitry 1001 to one or more other network nodes and/or to receive communications through network interface circuitry from one or more other network nodes. Moreover, modules may be stored in memory 1003, and these modules may provide instructions so that when instructions of a module are executed by processing circuitry 1002, processing circuitry 1002 performs respective operations (e.g., operations discussed below with respect to Example Embodiments relating to core network nodes).

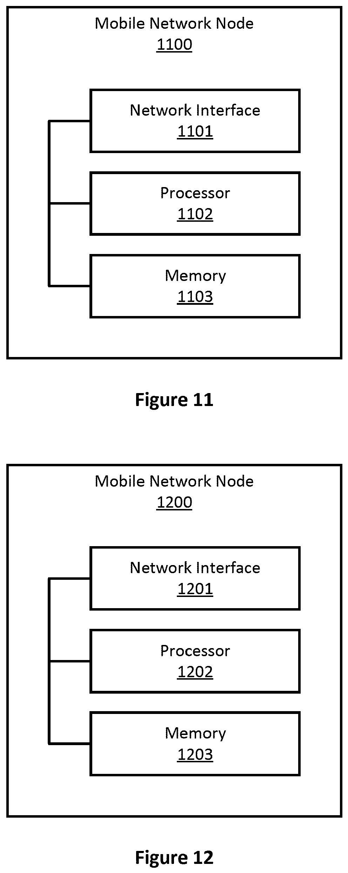

Figure 11 is a block diagram illustrating elements of a mobile network node 1100 of a mobile communications network. In some embodiments, the mobile network node 1100 is a NEF 109. As shown, the mobile network node may include network interface circuitry 1101 (also referred to as a network interface) configured to provide communications with other nodes of the core network and/or the network. The mobile network node may also include a processing circuitry 1102 (also referred to as a processor) coupled to the network interface circuitry, and memory circuitry 1103 (also referred to as memory) coupled to the processing circuitry. The memory circuitry 1103 may include computer readable program code that when executed by the processing circuitry 1102 causes the processing circuitry to perform operations according to embodiments disclosed herein. According to other embodiments, processing circuitry 1102 may be defined to include memory so that a separate memory circuitry is not required. As discussed herein, operations of the mobile network node may be performed by processing circuitry 1102 and/or network interface circuitry 1101. For example, processing circuitry 1102 may control network interface circuitry 1101 to transmit communications through network interface circuitry 1101 to one or more other network nodes and/or to receive communications through network interface circuitry from one or more other network nodes. Moreover, modules may be stored in memory 1103, and these modules may provide instructions so that when instructions of a module are executed by processing circuitry 1102, processing circuitry 1102 performs respective operations (e.g., operations discussed below with respect to Example Embodiments relating to core network nodes).

Figure 12 is a block diagram illustrating elements of a mobile network node 1200 of a mobile communications network. In some embodiments, the mobile network node 1200 is an AF 113. As shown, the mobile network node may include network interface circuitry 1201 (also referred to as a network interface) configured to provide communications with other nodes of the core network and/or the network. The mobile network node may also include a processing circuitry 1202 (also referred to as a processor) coupled to the network interface circuitry, and memory circuitry 1203 (also referred to as memory) coupled to the processing circuitry. The memory circuitry 1203 may include computer readable program code that when executed by the processing circuitry 1202 causes the processing circuitry to perform operations according to embodiments disclosed herein. According to other embodiments, processing circuitry 1202 may be defined to include memory so that a separate memory circuitry is not required. As discussed herein, operations of the mobile network node may be performed by processing circuitry 1202 and/or network interface circuitry 1201. For example, processing circuitry 1202 may control network interface circuitry 1201 to transmit communications through network interface circuitry 1201 to one or more other network nodes and/or to receive communications through network interface circuitry from one or more other network nodes. Moreover, modules may be stored in memory 1203, and these modules may provide instructions so that when instructions of a module are executed by processing circuitry 1202, processing circuitry 1202 performs respective operations (e.g., operations discussed below with respect to Example Embodiments relating to core network nodes).

## Claims

1. A method for access and mobility policy control in a communications network, the method performed by a first policy control entity for handling UE policies, the method comprising:
receiving at the first policy control entity for handling UE policies from a network node a notification including access and mobility policy data for a user equipment, the notification further including an application identifier or a packet flow descriptor to which the access and mobility policy data applies;
obtaining at the first policy control entity PDU session information for the user equipment relative to the application identifier or the packet flow descriptor, particularly wherein the PDU session information is at least one of an application start/stop event, an out of credit event, a reallocation of credit event or a usage report;
modifying at least one access and mobility policy at the first policy control entity based on the obtained PDU session information.

2. The method of claim 1, wherein obtaining at the first policy control entity PDU session information comprises transmitting from the first policy control entity to a second policy control entity for handling PDU session policies a request for PDU session information including the application identifier or the packet flow descriptor; and transmitting from the second policy control entity to the first policy control entity the requested PDU session information.

3. The method of any one of claims 1 to 2, wherein the access and mobility policy data received at the first policy control entity is originated from an application server.

4. The method of any one of claims 1 to 3, further comprising transmitting a notification from the first policy control entity to the application server or a network exposure entity indicating the successful modification of the at least one access and mobility policy.

5. The method of any one of claims 1 to 4, wherein the access and mobility policy data and/or access and mobility policy relate to the service area coverage of the application.

6. The method of any one of claims 1 to 5, wherein the first policy control entity is a Policy Control Function for the UE, the second policy control entity is a Policy Control Function for the PDU session, the network exposure entity is a Network Exposure Function, the network node is a User Data Repository, and the application server is an Application Function.

7. A method for access and mobility policy control in a communications network, the method performed by a second policy control entity for handling PDU session policies, the method comprising:
receiving at the second policy control entity for handling PDU session policies from a first policy control entity for handling UE policies a request for PDU session information including an application identifier or a packet flow descriptor; and
transmitting from the second policy control entity to the first policy control entity the requested PDU session information;
particularly wherein the PDU session information is at least one of an application start/stop event, an out of credit event, a reallocation of credit event or a usage report.

8. The method of claim 7, wherein the first policy control entity is a Policy Control Function for the UE, the second policy control entity is a Policy Control Function for the PDU session.

9. A method for access and mobility policy control in a communications network, the method performed by a network exposure entity, the method comprising:
receiving at the network exposure entity from an application server a request including access and mobility policy data for a user equipment, the request further including the application identifier or the packet flow descriptor to which the access and mobility policy data applies;
storing by the network exposure entity in a user data repository the access and mobility policy data along with the application identifier or the packet flow descriptor;
transmitting from the network exposure entity to the application server a response indicating the result of the request.

10. The method of any of claim 9, further comprising receiving a notification from a first policy control entity for handling UE policies at the network exposure entity indicating the successful modification of at least one access and mobility policy based on the access and mobility policy data.

11. The method of any one of claims 9 to 10, wherein the access and mobility policy data and/or access and mobility policy relate to the service area coverage of the application.

12. The method of any one of claims 9 to 11, wherein the first policy control entity is a Policy Control Function for the UE, the network exposure entity is a Network Exposure Function, the user data repository is a User Data Repository, and the application server is an Application Function.

13. A first policy control entity for access and mobility policy control in a communications network, the first policy control entity comprising a processor and a memory, the memory containing instructions executable by the processor such that the first policy control entity is operable to:
receive at the first policy control entity for handling UE policies from a network node a notification including access and mobility policy data for a user equipment, the notification further including an application identifier or a packet flow descriptor to which the access and mobility policy data applies;
obtain at the first policy control entity PDU session information for the user equipment relative to the application identifier or the packet flow descriptor, particularly wherein the PDU session information is at least one of an application start/stop event, an out of credit event, a reallocation of credit event or a usage report;
modify at least one access and mobility policy at the first policy control entity based on the obtained PDU session information.

14. The first policy control entity of claim 13, further operable to perform the method of any of claims 2 to 6.

15. A second policy control entity for access and mobility policy control in a communications network, the second policy control entity comprising a processor and a memory, the memory containing instructions executable by the processor such that the second policy control entity is operable to:
receive at the second policy control entity for handling PDU session policies from a first policy control entity for handling UE policies a request for PDU session information including an application identifier or a packet flow descriptor; and
transmit from the second policy control entity to the first policy control entity the requested PDU session information;
particularly wherein the PDU session information is at least one of an application start/stop event, an out of credit event, a reallocation of credit event or a usage report.

16. The second policy control entity of claim 14, further operable to perform the method of claim 8.

17. A network exposure entity for access and mobility policy control in a communications network, the network exposure entity comprising a processor and a memory, the memory containing instructions executable by the processor such that the network exposure entity is operable to:
receive at the network exposure entity from an application server a request including access and mobility policy data for a user equipment, the request further including the application identifier or the packet flow descriptor to which the access and mobility policy data applies;
store by the network exposure entity in a user data repository the access and mobility policy data along with the application identifier or the packet flow descriptor;
transmit from the network exposure entity to the application server a response indicating the result of the request.

18. The network exposure entity of claim 17, further operable to perform the method of any of claims 10 to 12.

## Patentansprüche

1. Verfahren zur Zugangs- und Mobilitätsrichtliniensteuerung in einem Kommunikationsnetzwerk, wobei das Verfahren von einer ersten Richtliniensteuerungsentität zum Handhaben von UE-Richtlinien durchgeführt wird, wobei das Verfahren Folgendes umfasst:
Empfangen einer Benachrichtigung, die Zugangs- und Mobilitätsrichtliniendaten für eine Benutzereinrichtung umfasst, an der ersten Richtliniensteuerungsentität zum Handhaben von UE-Richtlinien von einem Netzwerkknoten, wobei die Benachrichtigung ferner eine Anwendungskennung oder einen Paketflussdeskriptor umfasst, für die/den die Zugangs- und Mobilitätsrichtliniendaten gelten;
Erhalten von PDU-Sitzungsinformationen für die Benutzereinrichtung relativ zu der Anwendungskennung oder dem Paketflussdeskriptor an der ersten Richtliniensteuerungsentität, wobei es sich bei den PDU-Sitzungsinformationen insbesondere um mindestens eines von einem Start-/Stopp-Ereignis einer Anwendung, einem Guthaben-verbraucht-Ereignis, einem Kredit-Neuzuteilungs-Ereignis oder einem Nutzungsbericht handelt;
Modifizieren mindestens einer Zugangs- und Mobilitätsrichtlinie an der ersten Richtliniensteuerungsentität basierend auf den erhaltenen PDU-Sitzungsinformationen.

2. Verfahren nach Anspruch 1, wobei das Erhalten von PDU-Sitzungsinformationen an der ersten Richtliniensteuerungsentität Senden einer Anforderung von PDU-Sitzungsinformationen, die die Anwendungskennung oder den Paketflussdeskriptor umfasst, von der ersten Richtliniensteuerungsentität an eine zweite Richtliniensteuerungsentität zum Handhaben von PDU-Sitzungsrichtlinien und Senden der angeforderten PDU-Sitzungsinformationen von der zweiten Richtliniensteuerungsentität an die erste Richtliniensteuerungsentität umfasst.

3. Verfahren nach einem der Ansprüche 1 bis 2, wobei die Zugangs- und Mobilitätsrichtliniendaten, die an der ersten Richtliniensteuerungsentität empfangen werden, von einem Anwendungsserver stammen.

4. Verfahren nach einem der Ansprüche 1 bis 3, ferner umfassend Senden einer Benachrichtigung, die die erfolgreiche Modifikation der mindestens einen Zugangs- und Mobilitätsrichtlinie angibt, von der ersten Richtliniensteuerungsentität an den Anwendungsserver oder eine Netzwerkdarlegungsentität.

5. Verfahren nach einem der Ansprüche 1 bis 4, wobei die Zugangs- und Mobilitätsrichtliniendaten und/oder die Zugangs- und Mobilitätsrichtlinie die Dienstbereichsabdeckung der Anwendung betreffen.

6. Verfahren nach einem der Ansprüche 1 bis 5, wobei die erste Richtliniensteuerungsentität eine Richtliniensteuerungsfunktion für die UE ist, die zweite Richtliniensteuerungsentität eine Richtliniensteuerungsfunktion für die PDU-Sitzung ist, die Netzwerkdarlegungsentität eine Netzwerkdarlegungsfunktion ist, der Netzwerkknoten ein Benutzerdaten-Repository ist und der Anwendungsserver eine Anwendungsfunktion ist.

7. Verfahren zur Zugangs- und Mobilitätsrichtliniensteuerung in einem Kommunikationsnetzwerk, wobei das Verfahren von einer zweiten Richtliniensteuerungsentität zum Handhaben von PDU-Sitzungsrichtlinien durchgeführt wird, wobei das Verfahren Folgendes umfasst:
Empfangen einer Anforderung für PDU-Sitzungsinformationen, die eine Anwendungskennung oder einen Paketflussdeskriptor umfasst, an der zweiten Richtliniensteuerungsentität zum Handhaben von PDU-Sitzungsrichtlinien von einer ersten Richtliniensteuerungsentität zum Handhaben von UE-Richtlinien; und
Senden der angeforderten PDU-Sitzungsinformationen von der zweiten Richtliniensteuerungsentität an die erste Richtliniensteuerungsentität;
wobei es sich bei den PDU-Sitzungsinformationen insbesondere mindestens eines von einem Start-/Stopp-Ereignis einer Anwendung, einem Guthaben-verbraucht-Ereignis, einem Kredit-Neuzuteilungs-Ereignis oder einem Nutzungsbericht handelt.

8. Verfahren nach Anspruch 7, wobei die erste Richtliniensteuerungsentität eine Richtliniensteuerungsfunktion für die UE ist, die zweite Richtliniensteuerungsentität eine Richtliniensteuerungsfunktion für die PDU-Sitzung ist.

9. Verfahren zur Zugangs- und Mobilitätsrichtliniensteuerung in einem Kommunikationsnetzwerk, wobei das Verfahren von einer Netzwerkdarlegungsentität durchgeführt wird, wobei das Verfahren Folgendes umfasst:
Empfangen einer Benachrichtigung, die Zugangs- und Mobilitätsrichtliniendaten für eine Benutzereinrichtung umfasst, an der Netzwerkdarlegungsentität von einem Anwendungsserver, wobei die Anforderung ferner die Anwendungskennung oder den Paketflussdeskriptor umfasst, für die/den die Zugangs- und Mobilitätsrichtliniendaten gelten;
Speichern der Zugangs- und Mobilitätsrichtliniendaten zusammen mit der Anwendungskennung oder dem Paketflussdeskriptor durch die Netzwerkdarlegungsentität in einem Benutzerdaten-Repository;
Senden einer Antwort, die das Ergebnis der Anforderung angibt, von der Netzwerkdarlegungsentität an den Anwendungsserver.

10. Verfahren nach Anspruch 9, ferner umfassend Empfangen einer Benachrichtigung, die die erfolgreiche Modifikation mindestens einer Zugangs- und Mobilitätsrichtlinie basierend auf den Zugangs- und Mobilitätsrichtliniendaten angibt, an der Netzwerkdarlegungsentität von einer ersten Richtliniensteuerungsentität zum Handhaben von UE-Richtlinien.

11. Verfahren nach einem der Ansprüche 9 bis 10, wobei die Zugangs- und Mobilitätsrichtliniendaten und/oder die Zugangs- und Mobilitätsrichtlinie die Dienstbereichsabdeckung der Anwendung betreffen.

12. Verfahren nach einem der Ansprüche 9 bis 11, wobei die erste Richtliniensteuerungsentität eine Richtliniensteuerungsfunktion für die UE ist, die Netzwerkdarlegungsentität eine Netzwerkdarlegungsfunktion ist, der Netzwerkknoten ein Benutzerdaten-Repository ist und der Anwendungsserver eine Anwendungsfunktion ist.

13. Erste Richtliniensteuerungsentität zur Zugangs- und Mobilitätsrichtliniensteuerung in einem Kommunikationsnetzwerk, wobei die erste Richtliniensteuerungsentität einen Prozessor und einen Speicher umfasst, wobei der Speicher Anweisungen enthält, die von dem Prozessor ausgeführt werden können, sodass die erste Richtliniensteuerungsentität zu Folgendem ausgelegt ist:
Empfangen einer Benachrichtigung, die Zugangs- und Mobilitätsrichtliniendaten für eine Benutzereinrichtung umfasst, an der ersten Richtliniensteuerungsentität zum Handhaben von UE-Richtlinien von einem Netzwerkknoten, wobei die Benachrichtigung ferner eine Anwendungskennung oder einen Paketflussdeskriptor umfasst, für die/den die Zugangs- und Mobilitätsrichtliniendaten gelten;
Erhalten von PDU-Sitzungsinformationen für die Benutzereinrichtung relativ zu der Anwendungskennung oder dem Paketflussdeskriptor an der ersten Richtliniensteuerungsentität, wobei es sich bei den PDU-Sitzungsinformationen insbesondere um mindestens eines von einem Start-/Stopp-Ereignis einer Anwendung, einem Guthaben-verbraucht-Ereignis, einem Kredit-Neuzuteilungs-Ereignis oder einem Nutzungsbericht handelt;
Modifizieren mindestens einer Zugangs- und Mobilitätsrichtlinie an der ersten Richtliniensteuerungsentität basierend auf den erhaltenen PDU-Sitzungsinformationen.

14. Erste Richtliniensteuerungsentität nach Anspruch 13, die ferner zum Durchführen des Verfahrens nach einem der Ansprüche 2 bis 6 ausgelegt ist.

15. Zweite Richtliniensteuerungsentität zur Zugangs- und Mobilitätsrichtliniensteuerung in einem Kommunikationsnetzwerk, wobei die zweite Richtliniensteuerungsentität einen Prozessor und einen Speicher umfasst, wobei der Speicher Anweisungen enthält, die von dem Prozessor ausgeführt werden können, sodass die erste Richtliniensteuerungsentität zu Folgendem ausgelegt ist:
Empfangen einer Anforderung für PDU-Sitzungsinformationen, die eine Anwendungskennung oder einen Paketflussdeskriptor umfasst, an der zweiten Richtliniensteuerungsentität zum Handhaben von PDU-Sitzungsrichtlinien von einer ersten Richtliniensteuerungsentität zum Handhaben von UE-Richtlinien; und
Senden der angeforderten PDU-Sitzungsinformationen von der zweiten Richtliniensteuerungsentität an die erste Richtliniensteuerungsentität;
wobei es sich bei den PDU-Sitzungsinformationen insbesondere mindestens eines von einem Start-/Stopp-Ereignis einer Anwendung, einem Guthaben-verbraucht-Ereignis, einem Kredit-Neuzuteilungs-Ereignis oder einem Nutzungsbericht handelt.

16. Zweite Richtliniensteuerungsentität nach Anspruch 14, die ferner zum Durchführen des Verfahrens nach Anspruch 8 ausgelegt ist.

17. Netzwerkdarlegungsentität zur Zugangs- und Mobilitätsrichtliniensteuerung in einem Kommunikationsnetzwerk, wobei die Netzwerkdarlegungsentität einen Prozessor und einen Speicher umfasst, wobei der Speicher Anweisungen enthält, die von dem Prozessor ausgeführt werden können, sodass die Netzwerkdarlegungsentität zu Folgendem ausgelegt ist:
Empfangen einer Benachrichtigung, die Zugangs- und Mobilitätsrichtliniendaten für eine Benutzereinrichtung umfasst, an der Netzwerkdarlegungsentität von einem Anwendungsserver, wobei die Anforderung ferner die Anwendungskennung oder den Paketflussdeskriptor umfasst, für die/den die Zugangs- und Mobilitätsrichtliniendaten gelten;
Speichern der Zugangs- und Mobilitätsrichtliniendaten zusammen mit der Anwendungskennung oder dem Paketflussdeskriptor durch die Netzwerkdarlegungsentität in einem Benutzerdaten-Repository;
Senden einer Antwort, die das Ergebnis der Anforderung angibt, von der Netzwerkdarlegungsentität an den Anwendungsserver.

18. Netzwerkdarlegungsentität nach Anspruch 17, die ferner zum Durchführen des Verfahrens nach einem der Ansprüche 10 bis 12 ausgelegt ist.

## Revendications

1. Procédé de commande de politique d'accès et de mobilité dans un réseau de communication, le procédé étant réalisé par une première entité de commande de politique pour gérer des politiques d'UE, le procédé comprenant :
la réception, au niveau de la première entité de commande de politique pour gérer des politiques d'UE depuis un nœud de réseau, d'une notification incluant des données de politique d'accès et de mobilité pour un équipement utilisateur, la notification incluant en outre un identifiant d'application ou un descripteur de flux de paquets auquel les données de politique d'accès et de mobilité s'appliquent ;
l'obtention, au niveau de la première entité de commande de politique, d'informations de session PDU pour l'équipement utilisateur en ce qui concerne l'identifiant d'application ou le descripteur de flux de paquets, en particulier dans lequel les informations de session PDU sont au moins l'un parmi un événement de démarrage/d'arrêt d'application, un événement d'épuisement de crédit, un événement de réallocation de crédit ou un rapport d'utilisation ;
la modification d'au moins une politique d'accès et de mobilité au niveau de la première entité de commande de politique sur la base des informations de session PDU obtenues.

2. Procédé selon la revendication 1, dans lequel l'obtention, au niveau de la première entité de commande de politique, d'informations de session PDU comprend la transmission, de la première entité de commande de politique à une deuxième entité de commande de politique pour gérer des politiques de session PDU, d'une demande d'informations de session PDU incluant l'identifiant d'application ou le descripteur de flux de paquets ; et la transmission, de la deuxième entité de commande de politique à la première entité de commande de politique, des informations de session PDU demandées.

3. Procédé selon l'une quelconque des revendications 1 et 2, dans lequel les données de politique d'accès et de mobilité reçues au niveau de la première entité de commande de politique proviennent d'un serveur d'applications.

4. Procédé selon l'une quelconque des revendications 1 à 3, comprenant en outre la transmission d'une notification de la première entité de commande de politique au serveur d'applications ou à une entité d'exposition de réseau indiquant la modification réussie de l'au moins une politique d'accès et de mobilité.

5. Procédé selon l'une quelconque des revendications 1 à 4, dans lequel les données de politique d'accès et de mobilité et/ou la politique d'accès et de mobilité concernent la couverture de zone de desserte de l'application.

6. Procédé selon l'une quelconque des revendications 1 à 5, dans lequel la première entité de commande de politique est une fonction de commande de politique pour l'UE, la deuxième entité de commande de politique est une fonction de commande de politique pour la session PDU, l'entité d'exposition de réseau est une fonction d'exposition de réseau, le nœud de réseau est un référentiel de données d'utilisateur, et le serveur d'applications est une fonction d'application.

7. Procédé de commande de politique d'accès et de mobilité dans un réseau de communication, le procédé étant réalisé par une deuxième entité de commande de politique pour gérer des politiques de session PDU, le procédé comprenant :
la réception, au niveau de la deuxième entité de commande de politique pour gérer des politiques de session PDU depuis une première entité de commande de politique pour gérer des politiques d'UE, d'une demande d'informations de session PDU incluant un identifiant d'application ou un descripteur de flux de paquets ; et
la transmission, de la deuxième entité de commande de politique à la première entité de commande de politique, des informations de session PDU demandées ;
en particulier dans lequel les informations de session PDU sont au moins l'un parmi un événement de démarrage/d'arrêt d'application, un événement d'épuisement de crédit, un événement de réallocation de crédit ou un rapport d'utilisation.

8. Procédé selon la revendication 7, dans lequel la première entité de commande de politique est une fonction de commande de politique pour l'UE, la deuxième entité de commande de politique est une fonction de commande de politique pour la session PDU.

9. Procédé de commande de politique d'accès et de mobilité dans un réseau de communication, le procédé étant réalisé par une entité d'exposition de réseau, le procédé comprenant :
la réception, au niveau de l'entité d'exposition de réseau depuis un serveur d'applications, d'une demande incluant des données de politique d'accès et de mobilité pour un équipement utilisateur, la demande incluant en outre l'identifiant d'application ou le descripteur de flux de paquets auquel les données de politique d'accès et de mobilité s'appliquent ;
le stockage, par l'entité d'exposition de réseau dans un référentiel de données d'utilisateur, de données de politique d'accès et de mobilité avec l'identifiant d'application ou le descripteur de flux de paquets ;
la transmission, de l'entité d'exposition de réseau au serveur d'applications, d'une réponse indiquant le résultat de la demande.

10. Procédé selon la revendication 9, comprenant en outre la réception d'une notification, depuis une première entité de commande de politique pour gérer des politiques d'UE au niveau de l'entité d'exposition de réseau, indiquant la modification réussie d'au moins une politique d'accès et de mobilité sur la base des données de politique d'accès et de mobilité.

11. Procédé selon l'une quelconque des revendications 9 et 10, dans lequel les données de politique d'accès et de mobilité et/ou la politique d'accès et de mobilité concernent la couverture de zone de desserte de l'application.

12. Procédé selon l'une quelconque des revendications 9 à 11, dans lequel la première entité de commande de politique est une fonction de commande de politique pour l'UE, l'entité d'exposition de réseau est une fonction d'exposition de réseau, le référentiel de données d'utilisateur est un référentiel de données d'utilisateur, et le serveur d'applications est une fonction d'application.

13. Première entité de commande de politique pour une commande de politique d'accès et de mobilité dans un réseau de communication, la première entité de commande de politique comprenant un processeur et une mémoire, la mémoire contenant des instructions exécutables par le processeur de sorte que la première entité de commande de politique soit exploitable pour :
recevoir, au niveau de la première entité de commande de politique pour gérer des politiques d'UE depuis un nœud de réseau, une notification incluant des données de politique d'accès et de mobilité pour un équipement utilisateur, la notification incluant en outre un identifiant d'application ou un descripteur de flux de paquets auquel les données de politique d'accès et de mobilité s'appliquent ;
obtenir, au niveau de la première entité de commande de politique, des informations de session PDU pour l'équipement utilisateur en ce qui concerne l'identifiant d'application ou le descripteur de flux de paquets, en particulier dans laquelle les informations de session PDU sont au moins l'un parmi un événement de démarrage/d'arrêt d'application, un événement d'épuisement de crédit, un événement de réallocation de crédit ou un rapport d'utilisation ;
modifier au moins une politique d'accès et de mobilité au niveau de la première entité de commande de politique sur la base des informations de session PDU obtenues.

14. Première entité de commande de politique selon la revendication 13, exploitable en outre pour réaliser le procédé selon l'une quelconque des revendications 2 à 6.

15. Deuxième entité de commande de politique pour une commande de politique d'accès et de mobilité dans un réseau de communication, la deuxième entité de commande de politique comprenant un processeur et une mémoire, la mémoire contenant des instructions exécutables par le processeur de sorte que la deuxième entité de commande de politique soit exploitable pour :
recevoir, au niveau de la deuxième entité de commande de politique pour gérer des politiques de session PDU depuis une première entité de commande de politique pour gérer des politiques d'UE, une demande d'informations de session PDU incluant un identifiant d'application ou un descripteur de flux de paquets ; et
transmettre, de la deuxième entité de commande de politique à la première entité de commande de politique, les informations de session PDU demandées ;
en particulier dans laquelle les informations de session PDU sont au moins l'un parmi un événement de démarrage/d'arrêt d'application, un événement d'épuisement de crédit, un événement de réallocation de crédit ou un rapport d'utilisation.

16. Deuxième entité de commande de politique selon la revendication 14, exploitable en outre pour réaliser le procédé selon la revendication 8.

17. Entité d'exposition de réseau pour une commande de politique d'accès et de mobilité dans un réseau de communication, l'entité d'exposition de réseau comprenant un processeur et une mémoire, la mémoire contenant des instructions exécutables par le processeur de sorte que l'entité d'exposition de réseau soit exploitable pour :
recevoir, au niveau de l'entité d'exposition de réseau depuis un serveur d'applications, une demande incluant des données de politique d'accès et de mobilité pour un équipement utilisateur, la demande incluant en outre l'identifiant d'application ou le descripteur de flux de paquets auquel les données de politique d'accès et de mobilité s'appliquent ;
stocker, par l'entité d'exposition de réseau dans un référentiel de données d'utilisateur, les données de politique d'accès et de mobilité avec l'identifiant d'application ou le descripteur de flux de paquets ;
transmettre, de l'entité d'exposition de réseau au serveur d'applications, une réponse indiquant le résultat de la demande.

18. Entité d'exposition de réseau selon la revendication 17, exploitable en outre pour réaliser le procédé selon l'une quelconque des revendications 10 à 12.
